# NEUE EUROPÄISCHE PATENTSCHRIFT

(11) **EP 2 147 844 B2**
(45) Veröffentlichungstag und Bekanntmachung des Hinweises auf die Entscheidung über den Einspruch: **07.04.2021**
(45) Hinweis auf die Patenterteilung: 13.12.2017
(21) Anmeldenummer: 09162250.6
(22) Anmeldetag: 09.06.2009
(51) Int. Cl.: B61L 15/00, H04N 7/18

(54) **Vorrichtung zur Überwachung eines räumlichen Bereichs, insbesondere in der Umgebung oder innerhalb eines Fahrzeugs**
Device for monitoring an area in particular in the vicinity of or within a vehicle
Dispositif de surveillance d'une zone d'espace, notamment dans l'environnement ou à l'intérieur d'un véhicule

(30) Priorität: 22.07.2008 DE 102008034160
(43) Veröffentlichungstag der Anmeldung: 27.01.2010
(73) Patentinhaber: Siemens Mobility GmbH, 81739 München (DE)
(72) Erfinder: Hollfelder, Markus, 91052 Erlangen (DE); Döbeling, Klaus, 91083 Baiersdorf (DE); Rothbauer, Stefan, 85391 Allershausen (DE)

(56) Entgegenhaltungen:
- EP-A2- 1 902 900
- WO-A1-2006/032625
- DE-A1- 10 006 091
- DE-A1- 10 047 896
- DE-A1- 19 743 306
- GB-A- 2 455 420
- US-A1- 2006 170 285

## Beschreibung

Die Erfindung betrifft eine Vorrichtung zur Überwachung eines räumlichen Bereichs, insbesondere in der Umgebung oder innerhalb eines Fahrzeugs, vorzugsweise eines Schienenfahrzeugs, sowie ein entsprechendes Fahrzeug und ein entsprechendes Überwachungsverfahren.

Heutzutage werden häufig räumliche Bereiche mit Hilfe von technischen Vorrichtungen, wie z.B. Videokameras, überwacht. Insbesondere für Schienenfahrzeuge gibt es Bestrebungen, Bereiche innerhalb oder außerhalb des Schienenfahrzeugs mit einer Aufnahmeeinrichtung zu erfassen und den erfassten räumlichen Bereich dem Fahrzeugführer auf einer entsprechenden Anzeigeeinrichtung wiederzugeben. Auf diese Weise kann der Fahrzeugführer auch Bereiche des Schienenfahrzeugs sehen, die nicht unmittelbar in seinem Blickfeld liegen. Ein möglicher Einsatzbereich ist beispielsweise die Erfassung eines rückwärtigen bzw. seitlichen Bereichs am Schienenfahrzeug, insbesondere beim Öffnen und Schließen der Türen des Fahrzeugs oder beim Losfahren, Rückwärtsfahren und Rangieren, bzw. die Erfassung eines Fahrgastraums bei Einsatz des Schienenfahrzeugs im Personenverkehr.

Bei der soeben beschriebenen Überwachung von räumlichen Bereichen basierend auf einer Aufnahmeeinrichtung und einer Anzeigeeinrichtung besteht das Problem, dass es wegen technischer Mängel bzw. Fehler zu einer zeitverzögerten Wiedergabe des mit der Aufnahmeeinrichtung erfassten Bildstroms auf der Anzeigeeinrichtung kommen kann. Solche Zeitverzögerungen können beispielsweise durch eine Pufferung von Bildern des Bildstroms entstehen und führen unter Umständen zu einem Einfrieren des angezeigten Bildes auf der Anzeigeeinrichtung. Derartige Zeitverzögerungen können Sicherheitsprobleme nach sich ziehen, da mögliche Gefahrenquellen zu spät oder überhaupt nicht erkannt werden. Es besteht deshalb das Bedürfnis, entsprechende Fehler bei der Übermittlung des Bildstroms von der Aufnahmeeinrichtung an die Anzeigeeinrichtung zu detektieren. Eine derartige Detektion ist jedoch sehr aufwändig, da eine Vielzahl von technischen Komponenten, welche bei der Bildübertragung zwischen Aufnahmeeinrichtung und Anzeigeeinrichtung verwendet werden, kontinuierlich auf ihre Funktionsfähigkeit überprüft werden müssen.

In dem Dokument DE 100 47 896 A1 ist ein Verfahren zum Überprüfen der Funktionstüchtigkeit einer Sensoreinrichtung offenbart. Dabei wird ein veränderbares Muster erzeugt, welches von der Sensoreinrichtung detektiert und mittels einer Auswerteeinheit auf Störungen der Sensoreinrichtung hin ausgewertet wird.

Das Dokument DE 600 33 210 T2 offenbart eine Vorrichtung zur Übertragung von digitalen Videobildern mit einer Aufnahmeeinrichtung und mit einer Anwendungseinrichtung für durch diese Aufnahmeeinrichtung erzeugten Bilder, wobei diese ferner Mittel umfasst, um wenigstens ein Signal in dem Sichtfeld der Aufnahmeeinrichtung zu bilden, derart, dass das Signal auf wenigstens einigen der durch die Aufnahmeeinrichtung erzeugten Bildern erscheint, und dass das Signal so gebildet wird, dass sich dieses in dem Sichtfeld temporär verändert, um die Erkennung eines Standbildes auf der Anwendungseinrichtung der Bilder im Falle des Nichtvorliegens einer Veränderung des Signals zu ermöglichen.

Ferner betrifft die Druckschrift DE 100 06 091 A1 eine Vorrichtung und ein Verfahren zur Erkennung von Fehlern in Signalverarbeitungsanlagen der Sicherheitstechnik. Die Sicherheitsüberwachungsanlage weist eine Kameraeinheit mit einer Aufnahmeeinheit zum Erfassen einer Videoszene auf. Ferner wird in das entsprechende Videosignal ein Zusatzsignal eingestanzt. Das Zusatzsignal verändert sich dabei in einem einstellbaren Rhythmus.

Der Erfindung liegt die Aufgabe zugrunde, eine Überwachung eines räumlichen Bereichs derart zu ermöglichen, dass Verzögerungen bzw. Ausfälle bei der Bildübertragung zwischen Aufnahmeeinrichtung und Anzeigeeinrichtung auf einfache Weise und zuverlässig festgestellt werden können.

Diese Aufgabe wird durch die Merkmale der Vorrichtung gemäß Patentanspruch 1, durch die Merkmale des Fahrzeugs gemäß Patentanspruch 11 oder durch die Merkmale des Verfahrens gemäß Patentanspruch 17 gelöst. Weitere vorteilhafte Ausgestaltungen der Erfindung sind in den abhängigen Ansprüchen definiert.

Die erfindungsgemäße Vorrichtung umfasst eine Aufnahmeeinrichtung zur Aufnahme des zu überwachenden räumlichen Bereichs, wobei die Aufnahmeeinrichtung im Betrieb einen Bildstrom aus zeitlich aufeinander folgenden Bildern erzeugt. Die einzelnen Bilder enthalten dabei den aufgenommenen räumlichen Bereich. Die Vorrichtung weist ferner eine Anzeigeeinrichtung zur Anzeige des erzeugten Bildstroms auf, welche mit der Aufnahmeeinrichtung verbunden ist. Darüber hinaus ist in der Vorrichtung ein an den Betrieb der Aufnahmeeinrichtung gekoppeltes dynamisches Mittel zur Erzeugung einer optisch wahrnehmbaren zeitlichen Veränderung bei Betrieb der Aufnahmeeinrichtung vorgesehen. Das dynamische Mittel kann eine Mehrzahl von Zuständen annehmen, wobei diese Zustände sowohl kontinuierliche als auch diskrete Zustände sein können. Die optisch wahrnehmbare zeitliche Veränderung wird dabei mit dem dynamischen Mittel durch eine Veränderung der Zustände erzeugt.

Der Ausdruck "an den Betrieb der Aufnahmeeinrichtung gekoppelt" ist derart zu verstehen, dass das dynamische Mittel Teil der Vorrichtung ist und bei Betrieb der Aufnahmeeinrichtung im Regelfall auch immer die optisch wahrnehmbare zeitliche Veränderung durch das dynamische Mittel erzeugt wird, sofern nicht durch einen Nutzereingriff die optisch wahrnehmbare zeitliche Veränderung abgeschaltet wird.

In der erfindungsgemäßen Vorrichtung wirkt die Aufnahmeeinrichtung im Betrieb derart mit dem dynamischen Mittel zusammen, dass ein jeweiliges, durch die Aufnahmeeinrichtung erzeugtes Bild den Zustand des dynamischen Mittels zum Zeitpunkt der Erzeugung des jeweiligen Bildes enthält. Hierdurch wird mit Hilfe des dynamischen Mittels der Zeitpunkt der Bilderzeugung in das jeweilige Bild codiert. Der auf der Anzeigeeinrichtung angezeigte Bildstrom enthält somit eine dynamische Veränderung, auf deren Basis erkannt werden kann, ob Zeitverzögerungen bzw. Bildausfälle bei der Übermittlung des Bildstroms von der Aufnahmeeinrichtung zur Anzeigeeinrichtung aufgetreten sind. Insbesondere kann durch einen Betrachter des angezeigten Bildstroms bzw. gegebenenfalls durch ein automatisches Erkennungsverfahren bei einer ruckartigen Veränderung der Zustände des angezeigten dynamischen Mittels bzw. im Falle eines Einfrierens des Zustandes des dynamischen Mittels erkannt werden, dass es sicherheitskritische Probleme bei der Datenübertragung gibt.

In der erfindungsgemäßen Vorrichtung umfasst das dynamische Mittel zumindest ein dynamisches Element, welches derart in Bezug auf die Aufnahmeeinrichtung angeordnet ist, dass die Aufnahmeeinrichtung das dynamische Element aufnimmt. Durch die Anordnung eines dynamischen Elements im zu überwachenden räumlichen Bereich wird somit die zum Zeitpunkt der Bilderzeugung vorliegende Dynamik besonders einfach ohne spezielle technische Mittel in der Aufnahmeeinrichtung integriert. Das dynamische Element kann dabei auf beliebige Art und Weise realisiert werden, entscheidend ist lediglich, dass es seine Zustände optisch wahrnehmbar in regelmäßigen Zeitabständen bzw. kontinuierlich verändert. Beispielsweise könne das dynamische Element eine Zeitanzeige, insbesondere eine digitale und/oder analoge Zeitanzeige, sein. Die Zeitanzeige gibt die zeitliche Veränderung vorzugsweise zumindest in Sekunden oder kleineren Einheiten wieder.

In der erfindungsgemäßen Vorrichtung ist außerdem ein in der Anzeigeeinrichtung integriertes oder an der Anzeigeeinrichtung angeordnetes weiteres Anzeigeelement vorgesehen, auf dem die gleiche zeitliche Veränderung wie die von dem dynamischen Mittel erzeugte optisch wahrnehmbare zeitliche Veränderung wiedergegeben wird. Der Ausdruck "gleiche zeitliche Veränderung" ist hierbei derart zu verstehen, dass beide zeitlichen Veränderungen miteinander synchronisiert sind, wobei jedoch nicht zwangsläufig die Veränderung in identischer Art und Weise wiedergegeben sein muss. Insbesondere kann die zeitliche Veränderung über eine analoge Zeitanzeige und die andere zeitliche Veränderung über eine digitale Anzeige wiedergegeben werden. Vorzugsweise werden jedoch die gleichen Anzeigen verwendet, wodurch die Vergleichbarkeit beider Anzeigen verbessert wird.

Durch die Verwendung des weiteren Anzeigeelements können insbesondere Zeitverzögerungen erkannt werden, welche sich beispielsweise beim Zwischenspeichern von Bildern in einem Puffer ergeben, da in diesem Fall die auf der Anzeigeeinrichtung wiedergegebene zeitliche Veränderung im Vergleich zu der auf dem weiteren Anzeigeelement dargestellten Veränderung zeitverzögert stattfindet. Eine Synchronisation zwischen der zeitlichen Veränderung des dynamischen Mittels und der auf dem weiteren Anzeigeelement wiedergegebenen zeitlichen Veränderung wird in einer bevorzugten Ausführungsform dadurch erreicht, dass das dynamische Mittel und das weitere Anzeigenelement einen gemeinsamen Zeitgeber verwenden. In einer weiteren, besonders bevorzugten Ausführungsform umfasst die Aufnahmeeinrichtung zumindest eine Kamera, insbesondere eine digitale Kamera.
Das erfindungsgemäße Verfahren hat den Vorteil, dass eine Ende-zu-Ende-Absicherung der Bildübertragung zwischen Aufnahmeeinrichtung und Anzeigeeinrichtung dadurch gewährleistet ist, dass unmittelbar bei der Erzeugung des Bildstroms eine Information über die zeitliche Dynamik in die einzelnen Bilder des Stroms integriert wird und Fehler bzw. Zeitverzögerungen bei der Bildübertragung durch eine Veränderung der ursprünglichen Dynamik am entgegengesetzten Ende der Bildübertragung auf der Anzeigeeinrichtung erkannt werden können. Es ist somit nicht mehr erforderlich, durch aufwändige technische Maßnahmen entsprechende Komponenten in der Wirkkette zwischen Aufnahmeeinrichtung und Anzeigeeinrichtung zu überwachen.

In einer bevorzugten Ausführungsform der Erfindung wird eine besonders effektive Erkennung von Zeitverzögerungen bei der Bildübertragung dann erreicht, wenn die durch das dynamische Mittel erzeugte optisch wahrnehmbare zeitliche Veränderung eine feine Auflösung aufweist bzw. kontinuierlich ist. In einer besonders bevorzugten Ausführungsform werden durch die optisch wahrnehmbare zeitliche Veränderung Zeitabstände von weniger als fünf Sekunden, insbesondere eine Sekunde oder weniger, aufgelöst.

Darüber hinaus könnte das zumindest eine dynamische Element ein sich periodisch veränderndes optisches Element umfassen, beispielsweise eine blinkende optische Einrichtung, wie z.B. eine blinkende Lampe. Das dynamische Element ist dabei vorzugsweise im Randbereich des mit der Aufnahmeeinrichtung aufgenommenen räumlichen Bereichs angeordnet.

Zusätzlich oder alternativ zur Verwendung eines dynamischen Elements kann in einer Ausführungsform der erfindungsgemäßen Vorrichtung das dynamische Mittel als ein in der Aufnahmeeinrichtung integrierter Zeitgeber realisiert sein, der eine sich zeitlich verändernde Anzeige generiert, wobei der Zustand der Anzeige zu dem Zeitpunkt, an dem das jeweilige Bild durch die Aufnahmeeinrichtung erzeugt wird, in dem jeweiligen erzeugten Bild wiedergegeben wird. Auf diese Weise wird eine besonders kompakte Realisierung des dynamischen Mittels in der Aufnahmeeinrichtung ermöglicht.

Um automatisiert ohne Zwischenschaltung eines menschlichen Benutzers Zeitverzögerungen bei der Wiedergabe des Bildstroms zu erkennen, ist in einer bevorzugten Ausführungsform eine Auswerteeinheit vorgesehen, welche im Betrieb den auf der Anzeigeeinrichtung angezeigten Bildstrom dahingehend analysiert, ob die optisch wahrnehmbare zeitliche Veränderung im angezeigten Bildstrom der durch das dynamische Mittel erzeugten optisch wahrnehmbaren zeitlichen Veränderung entspricht. Dies geschieht vorzugsweise mit Hilfe des oben definierten weiteren Anzeigeelements. Dabei verwendet die Auswerteeinheit ein Aufnahmemittel zum Aufnehmen der Anzeige sowohl der Anzeigeeinrichtung als auch des weiteren Anzeigeelements und analysiert die aufgenommenen Anzeigen dahingehend, ob die angezeigten zeitlichen Veränderungen einander entsprechen. Zur Analyse können aus dem Stand der Technik bekannte Bilderkennungsverfahren eingesetzt werden.

Neben der oben beschriebenen Vorrichtung umfasst die Erfindung ferner ein Fahrzeug, insbesondere ein Schienenfahrzeug wie z.B. einen Triebwagen oder eine Lokomotive, wobei das Fahrzeug eine oder mehrere der erfindungsgemäßen Vorrichtungen beinhaltet. Vorzugsweise ist dabei die Aufnahmeeinrichtung der erfindungsgemäßen Vorrichtung derart am oder im Schienenfahrzeug angeordnet, dass ein rückwärtig vom Führerstand des Schienenfahrzeugs liegender Bereich durch die Aufnahmeeinrichtung aufgenommen wird, wobei der aufgenommene Bereich beispielsweise eine Seitenspiegelansicht des Führerstands umfassen kann. Gegebenenfalls kann die Aufnahmeeinrichtung auch derart am oder im Schienenfahrzeug angeordnet sein, dass zumindest ein Teil des Innenraums, insbesondere eines Fahrgastraums, des Schienenfahrzeugs durch die Aufnahmeeinrichtung aufgenommen wird.

Um eine effiziente Überprüfung des mit der erfindungsgemäßen Vorrichtung überwachten Bereichs durch den Führer des Schienenfahrzeugs zu ermöglichen, ist die Anzeigeeinrichtung vorzugsweise Teil des Cockpits des Führerstands des Schienenfahrzeugs. In der Ausführungsform der Erfindung, welche ein weiteres Anzeigeelement verwendet, ist das weitere Anzeigeelement vorzugsweise ebenfalls Teil des Cockpits des Führerstands und insbesondere derart in Bezug auf die Anzeigeeinrichtung angeordnet, dass die Anzeigeeinrichtung und das Anzeigeelement durch den Führer des Schienenfahrzeugs gleichzeitig wahrgenommen werden können.

Neben der oben beschriebenen Vorrichtung und dem oben beschriebenen Fahrzeug umfasst die Erfindung ferner ein Verfahren zur Überwachung eines räumlichen Bereichs unter Verwendung der erfindungsgemäßen Überwachungsvorrichtung. In dem erfindungsgemäßen Verfahren nimmt die Aufnahmeeinrichtung der erfindungsgemäßen Vorrichtung den räumlichen Bereich auf und erzeugt einen Bildstrom aus zeitlich aufeinander folgenden Bildern, der den räumlichen Bereich umfasst. Die mit der Aufnahmeeinrichtung verbundene Anzeigeeinrichtung zeigt den erzeugten Bildstrom an. Das an den Betrieb der Aufnahmeeinrichtung gekoppelte dynamische Mittel erzeugt eine optisch wahrnehmbare zeitliche Veränderung bei Betrieb der Aufnahmeeinrichtung, wobei das dynamische Mittel eine Mehrzahl von Zuständen annehmen kann und die optisch wahrnehmbare zeitliche Veränderung mit dem dynamischen Mittel durch eine Veränderung der Zustände erzeugt wird. Ferner umfasst das dynamische Mittel zumindest ein dynamisches Element, wobei das dynamische Mittel zumindest ein dynamisches Element umfasst, welches derart in Bezug auf die Aufnahmeeinrichtung angeordnet ist, dass die Aufnahmeeinrichtung im Betrieb das dynamische Element aufnimmt. Das erfindungsgemäße Verfahren zeichnet sich dadurch aus, dass ein jeweiliges, durch die Aufnahmeeinrichtung erzeugtes Bild den Zustand des dynamischen Mittels zum Zeitpunkt der Erzeugung des jeweiligen Bildes enthält.

Ein Ausführungsbeispiel gemäß dem Stand der Technik und eine Ausführungsform der Erfindung werden nachfolgend anhand der beigefügten Zeichnungen detailliert beschrieben.

Es zeigen:
- Fig. 1: eine schematische Darstellung der Überwachung des Außenbereichs eines Schienenfahrzeugs basierend auf einem Ausführungsbeispiel gemäß dem Stand der Technik ; und
- Fig. 2: die schematische Darstellung einer Überwachung des Außenbereichs eines Schienenfahrzeugs basierend auf einer Ausführungsform der erfindungsgemäßen Vorrichtung.

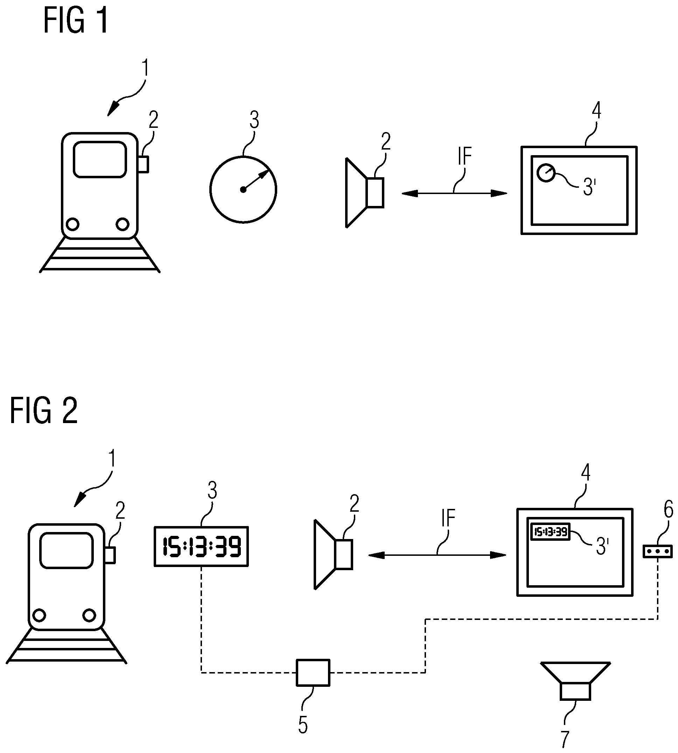

Die nachfolgend beschriebene Ausführungsform der erfindungsgemäßen Vorrichtung in Fig. 2 wird in Bezug auf die Überwachung des Außenbereichs eines Schienenfahrzeugs beschrieben. Nichtsdestotrotz kann die erfindungsgemäße Vorrichtung auch zur Überwachung anderer räumlichen Bereiche des Schienenfahrzeugs, beispielsweise des Fahrgastraums im Schienenfahrzeug, sowie beliebiger anderer Umgebungen, beispielsweise bei der Überwachung von Bankräumen, des Innen- und Außenbereichs anderer Fahrzeuge, wie von Kraftfahrzeugen, Flugzeugen, Schiffen und dergleichen, eingesetzt werden. Ein weiterer Einsatzbereich ist die Überwachung von Fertigungs- oder Prozesssteuerungsanlagen.

In dem Ausführungsbeispiel gemäß dem Stand der Technik gemäß Fig. 1 wird eine Vorrichtung zur Überwachung eines Schienenfahrzeugs 1 verwendet, welches in Frontansicht wiedergegeben ist. Im vorderen Teil des Schienenfahrzeugs 1 ist an einer seiner Außenseiten eine Kamera 2 vorgesehen, welche eine Aufnahmeeinrichtung im Sinne von Anspruch 1 darstellt. Ziel ist es nunmehr, den hinteren Bereich des Schienenfahrzeugs 1 mit der Kamera 2 zu überwachen. Die Kamera ist eine digitale Videokamera und ermöglicht dem Triebwagenführer im Führerstand des Schienenfahrzeugs 1 eine Rückschau nach Art einer Seitenspiegelansicht. Der durch die Videokamera 2 als Bildstrom erfasste räumliche Bereich wird auf einem entsprechenden Anzeigemonitor 4 (z.B. einem TFT-Monitor), der eine Anzeigeeinrichtung im Sinne von Anspruch 1 darstellt, im Cockpit des Führerstands angezeigt. Dabei besteht das Problem, dass es ggf. zu einer Verzögerung des übertragenen Bildstroms von der Kamera 2 zur Anzeigeeinrichtung 4 kommen kann, so dass der angezeigte Bildstrom unter Umständen nicht aktuell ist. Dies kann zu Sicherheitsproblemen führen, wenn der Triebwagenfahrer beispielsweise bei einer Rückwärtsfahrt ein auftretendes Objekt, welches zu einer Kollision mit dem Schienenfahrzeug führt, aufgrund der verzögerten Darstellung auf dem Monitor 4 zu spät sieht. Das gleiche Problem tritt bei einem führerlosen Fahrzeug mit einer Kamera in Fahrtrichtung auf, welches über eine Leitwarte gesteuert wird.

In dem Ausführungsbeispiel gemäß dem Stand der Technik gemäß Fig. 1 wird dieses Problem dadurch umgangen, dass ein dynamisches Element 3 derart am Schienenfahrzeug angeordnet ist, dass es im aufgenommenen Bildstrom der Kamera 2 enthalten ist. Das dynamische Element 3 ist in Fig. 1 schematisch als rotierender Sekundenzeiger auf einem Ziffernblatt dargestellt, kann aber auch auf beliebige andere Weise realisiert sein. Entscheidend ist, dass das dynamische Element eine optisch wahrnehmbare zeitliche Veränderung generiert, wobei die Veränderung bei einem Sekundenzeiger dessen Bewegung ist. Im einfachsten Fall könnte als dynamisches Element eine periodisch blinkende Lampe eingesetzt werden, deren Blinken asynchron zur Aufzeichnungsfrequenz des Bilderstroms ist.

Wie bereits erwähnt, wird das dynamische Element durch die Kamera 2 aufgenommen, wobei diese Aufnahme nochmals durch eine neben dem dynamischen Element 3 vergrößert dargestellte Kamera 2 wiedergegeben ist. Bei der Erzeugung der einzelnen Bilder des Bildstroms ist nunmehr in jedem Bild das dynamische Element in seinem Zustand zum Zeitpunkt der Erzeugung des jeweiligen Bildes enthalten. Es wird somit unmittelbar bei der Bilderzeugung die Information über die zeitliche Dynamik im Bildstrom codiert. Der Bildstrom wird über eine entsprechende Schnittstelle IF, welche als Doppelpfeil angedeutet ist, zum Monitor 4 übertragen und dort angezeigt. Als Schnittstelle wird dabei eine Schnittstelle mit geringer Latenzzeit verwendet. Beispielsweise könnte eine Analogschnittstelle oder eine Schnittstelle basierend auf GigE (GigE = Gigabit Ethernet) eingesetzt werden.

Wie aus Fig. 1 ersichtlich ist, enthält der auf dem Monitor 4 angezeigte Bildstrom nunmehr das aufgenommene dynamische Element 3, was durch Bezugszeichen 3' angedeutet ist. Das dynamische Element ist dabei vorzugsweise derart in Bezug auf die Kamera 2 angeordnet, dass es im Randbereich des durch die Kamera erfassten räumlichen Bereichs liegt, so dass durch das dynamische Element der zu überwachende Bereich nur geringfügig verdeckt wird. Betrachtet nunmehr der Triebwagenführer den rückwärtigen Bereich des Schienenfahrzeugs 1 auf dem Monitor 4, so kann er Zeitverzögerungen durch Betrachten des angezeigten dynamischen Elements 3' erkennen. Sollte sich beispielsweise der Sekundenzeiger des dynamischen Elements 3' ruckartig bewegen bzw. dessen Bewegung sogar stoppen, kann der Fahrer erkennen, dass es zu Verzögerungen bei der Bildübertragung kommt, welche sich insbesondere in einem Einfrieren des Bildes auf der Anzeigeeinheit äußern. Der Triebwagenführer kann dann seine Rückwärtsfahrt stoppen bzw. die Rückwärtsfahrt mit Blick aus einem Seitenfenster des Triebwagens nach hinten fortsetzen, um hierdurch möglicherweise auftretende Sicherheitsprobleme aufgrund der zeitverzögerten bzw. eingefrorenen Darstellung auf dem Monitor 4 zu vermeiden.

Der Vorteil der anhand von Fig. 1 erläuterten Vorrichtung besteht darin, dass eine Ende-zu-Ende-Aufdeckung von auftretenden technischen Fehlern zwischen der Bilderzeugung durch die Kamera 2 und der Bildanzeige auf dem Monitor 4 erreicht wird, da von der Kamera direkt im erzeugten Bildstrom eine zeitliche Dynamik erfasst wird, welche am entgegengesetzten Ende der Bildübertragungsstrecke auf dem Monitor 4 wiedergegeben wird. Es wird somit auf aufwändige technische Maßnahmen zur Überwachung von technischen Komponenten innerhalb der Wirckette zwischen Kamera 2 und Monitor 4 verzichtet. Eine solche Überwachung von technischen Komponenten hat insbesondere den Nachteil, dass diese Überwachung auch Fehlerausfällen unterliegen kann. Ferner müsste eine solche Überwachung an allen technischen Komponenten innerhalb der Wirkkette vorgesehen sein, da ansonsten keine sichere Detektion von Fehlerfällen erreicht werden kann. Die technischen Maßnahmen müssten insbesondere Tests der Sensorik der Kamera umfassen. Solche Tests sind nur sehr schwer zu realisieren. Ebenso müsste der Grafikcontroller der Kamera überprüft werden, was ebenfalls kaum möglich ist. Des Weiteren müsste die Verarbeitungseinheit zur Anbindung der Kamera 2 bzw. der Schnittstelle IF und deren Anbindung an den Monitor 4 überprüft werden. Dies ist zwar technisch möglich, jedoch sehr aufwändig. Dabei müsste ferner ein spezielles Sicherheitsprotokoll definiert werden. Darüber hinaus müsste auch der Grafikcontroller am Monitor 4 überprüft werden. Eine derartige Überprüfung ist auch nur sehr schwer umsetzbar.

Fig. 2 zeigt schematisiert eine Ausführungsform der erfindungsgemäßen Überwachungsvorrichtung, wobei gleiche bzw. entsprechende Bauteile mit den gleichen Bezugszeichen wie in dem Ausführungsbeispiel der Fig. 1 bezeichnet sind. Im Unterschied zum Beispiel aus dem Stand der Technik der Fig. 1 wird als dynamisches Element 3 eine digitale Anzeige einer Uhrzeit verwendet, wobei sich die Dynamik durch die Veränderung der Sekunden, Minuten bzw. Stunden ergibt. Die dargestellte Uhrzeit wird durch einen Zeitgeber 5 erzeugt, wobei dieser Zeitgeber ferner von einem weiteren digitalen Anzeigeelement 6 verwendet wird, welches neben dem Monitor 4 angeordnet ist. Die Anbindung des Zeitgebers 5 an die Elemente 4 und 6 ist dabei mit einer gestrichelten Linie angedeutet. Das weitere Anzeigeelement 6 zeigt genauso wie das dynamische Element 3 die Uhrzeit an, wobei durch die Verwendung des gleichen Zeitgebers 5 sowohl für das dynamische Element 3 als auch das Anzeigeelement 6 sichergestellt ist, dass auf beiden Elementen die gleiche Uhrzeit wiedergegeben wird.

Analog dem Ausführungsbeispiel gemäß dem Stand der Technik der Fig. 1 ist das dynamische Element 3 wiederum in einem Randbereich des durch die Kamera 2 erfassten räumlichen Bereichs angeordnet. Dies führt dazu, dass in dem über die Schnittstelle IF übertragenen Bildstrom das dynamische Element im Randbereich des Monitors 4 wiedergegeben ist. Das im Monitor angezeigte dynamische Element ist mit dem Bezugszeichen 3' gezeigt. Im Unterschied dem Ausführungsbeispiel der Fig. 1 sieht der Triebwagenführer nunmehr neben dem Monitor 4 ferner das weitere Anzeigeelement 6. Die Anordnung der beiden Elemente ist dabei derart, dass der Triebwagenführer beide Elemente gleichzeitig wahrnehmen kann. Sollte es nunmehr zu einer Zeitverzögerung bei der Übertragung des Bildstroms von der Kamera 2 zum Monitor 4 kommen, kann dies der Triebwagenführer nicht nur anhand des Monitors 4 durch eine ruckartige Veränderung der Dynamik des angezeigten dynamischen Elements 3' bzw. ein Einfrieren der Dynamik feststellen, sondern er kann auch einen Vergleich der auf dem Monitor 4 angezeigten Uhrzeit mit der auf dem weiteren Anzeigeelement 6 angezeigten Uhrzeit vornehmen. Hierdurch kann der Triebwagenführer insbesondere solche Zeitverzögerungen feststellen, welche sich durch eine Pufferung der übertragenen Bilder ergeben. In diesem Fall wird beim Auslesen eines entsprechenden Pufferspeichers immer noch die ursprüngliche Dynamik auf dem Monitor 4 angezeigt, jedoch ist die Uhrzeit gegenüber der Uhrzeit auf dem weiteren Anzeigeelement 6 versetzt.

Optional kann die Beurteilung, ob Zeitverzögerungen zwischen der Erzeugung und der Anzeige des Bildstroms auftreten, nicht oder nicht nur durch den Triebwagenführer, sondern mit einer entsprechenden Auswerteeinheit 7 durchgeführt werden, welche in Fig. 2 beispielhaft als weitere Kamera mit entsprechender (nicht gezeigter) Auswertelogik realisiert ist. Die Kamera kann dabei zur Auswertung gleichzeitig den Monitor 4 mit dem angezeigten dynamischen Element 3' sowie das weitere Anzeigeelement 6 aufnehmen. Mit einem entsprechenden Bilderkennungs- und Analyseverfahren können dann die beiden angezeigten Uhrzeiten erkannt werden und verglichen werden. Sollten Abweichungen auftreten, kann eine entsprechende Warnmeldung optisch oder akustisch für den Triebwagenführer ausgegeben werden. Hierdurch wird eine automatische Ende-zu-Ende-Überwachung zwischen dem erzeugten und angezeigten Bildstrom erreicht, ohne dass der Triebwagenführer die Anzeigen beobachten muss. Auf diese Weise wird der Triebwagenführer entlastet und auf menschlichem Versagen beruhende Fehlerquellen werden vermieden.

## Patentansprüche

1. Vorrichtung zur Überwachung eines räumlichen Bereichs, insbesondere in der Umgebung oder innerhalb eines Fahrzeugs, vorzugsweise eines Schienenfahrzeugs (1), umfassend:
- eine Aufnahmeeinrichtung (2) zur Aufnahme des räumlichen Bereichs, wobei die Aufnahmeeinrichtung (2) im Betrieb einen Bildstrom aus zeitlich aufeinander folgenden Bildern umfassend den räumlichen Bereich erzeugt;
- eine mit der Aufnahmeeinrichtung (2) verbundene Anzeigeeinrichtung (4) zur Anzeige des erzeugten Bildstroms;
- ein an den Betrieb der Aufnahmeeinrichtung (2) gekoppeltes dynamisches Mittel (3) zur Erzeugung einer optisch wahrnehmbaren zeitlichen Veränderung bei Betrieb der Aufnahmeeinrichtung (2), wobei das dynamische Mittel (3) eine Mehrzahl von Zuständen annehmen kann und die optisch wahrnehmbare zeitliche Veränderung mit dem dynamischen Mittel (3) durch eine Veränderung der Zustände erzeugbar ist,
- ein dynamisches Element des dynamischen Mittels (3), welches derart in Bezug auf die Aufnahmeeinrichtung (2) angeordnet ist, dass die Aufnahmeeinrichtung (2) im Betrieb das dynamische Element aufnimmt;
- wobei die Aufnahmeeinrichtung (2) im Betrieb derart mit dem dynamischen Mittel (3) zusammenwirkt, dass ein jeweiliges, durch die Aufnahmeeinrichtung (2) erzeugtes Bild den Zustand des dynamischen Mittels (3) zum Zeitpunkt der Erzeugung des jeweiligen Bildes enthält,
**dadurch gekennzeichnet, dass**
ein in der Anzeigeeinrichtung (4) integriertes oder an der Anzeigeeinrichtung (4) angeordnetes weiteres Anzeigeelement (6) vorgesehen ist, auf dem die gleiche zeitliche Veränderung wie die von dem dynamischen Mittel (3) erzeugte optisch wahrnehmbare zeitliche Veränderung wiedergegeben wird.

2. Vorrichtung nach Anspruch 1, wobei die durch das dynamische Mittel (3) erzeugte optisch wahrnehmbare zeitliche Veränderung Zeitabstände von weniger als fünf Sekunden, insbesondere von einer Sekunde oder weniger, auflöst und/oder kontinuierlich ist.

3. Vorrichtung nach einem der vorhergehenden Ansprüche, wobei das zumindest eine dynamische Element eine Zeitanzeige umfasst.

4. Vorrichtung nach Anspruch 3, wobei die Zeitanzeige eine digitale und/oder analoge Zeitanzeige ist, welche insbesondere die zeitliche Veränderung zumindest in Sekunden oder kleineren Einheiten wiedergibt.

5. Vorrichtung nach einem der vorhergehenden Ansprüche, wobei das zumindest eine dynamische Element ein sich periodisch veränderndes optisches Element, insbesondere eine blinkende optische Einrichtung, umfasst.

6. Vorrichtung nach einem der vorhergehenden Ansprüche, wobei das dynamische Mittel (3) einen in der Aufnahmeeinrichtung (2) integrierten Zeitgeber umfasst, der eine sich zeitlich verändernde Anzeige generiert, wobei der Zustand der Anzeige zum Zeitpunkt der Erzeugung des jeweiligen Bildes in dem jeweiligen erzeugten Bild wiedergegeben wird.

7. Vorrichtung nach Anspruch 6, wobei das dynamische Mittel (3) und das weitere Anzeigeelement (6) zur Erzeugung der gleichen zeitlichen Veränderung einen gemeinsamen Zeitgeber (5) verwenden.

8. Vorrichtung nach einem der vorhergehenden Ansprüche, wobei die Aufnahmeeinrichtung (2) zumindest eine Kamera, insbesondere eine digitale Kamera, umfasst.

9. Vorrichtung nach einem der vorhergehenden Ansprüche, ferner umfassend eine Auswerteeinheit (7), welche im Betrieb den auf der Anzeigeeinrichtung (4) angezeigten Bildstrom dahingehend analysiert, ob die optisch wahrnehmbare zeitliche Veränderung im angezeigten Bildstrom der durch das dynamische Mittel (3) erzeugten optisch wahrnehmbaren zeitlichen Veränderung entspricht.

10. Vorrichtung nach Anspruch 9 in Kombination mit Anspruch 7, wobei die Auswerteeinheit (7) ein Aufnahmemittel zum Aufnehmen der Anzeige der Anzeigeeinrichtung (4) und des weiteren Anzeigeelements (6) umfasst und die Auswerteeinheit (7) die aufgenommenen Anzeigen dahingehend analysiert, ob die angezeigten zeitlichen Veränderungen auf der Anzeigeeinheit (4) und dem weiteren Anzeigeelement (6) einander entsprechen.

11. Fahrzeug, wobei das Fahrzeug eine oder mehrere Vorrichtungen nach einem der vorhergehenden Ansprüche umfasst.

12. Fahrzeug nach Anspruch 11, wobei das Fahrzeug ein Schienenfahrzeug (1), insbesondere ein Triebwagen oder eine Lokomotive, ist.

13. Fahrzeug nach Anspruch 12, wobei die Aufnahmeeinrichtung (2) derart am oder im Schienenfahrzeug (1) angeordnet ist, dass ein rückwärtig vom Führerstand des Schienenfahrzeugs (1) liegender Bereich durch die Aufnahmeeinrichtung (2) aufgenommen wird.

14. Fahrzeug nach Anspruch 12 oder 13, wobei die Aufnahmeeinrichtung (2) derart am oder im Schienenfahrzeug (1) angeordnet ist, dass zumindest ein Teil des Innenraums, insbesondere eines Fahrgastraums, des Schienenfahrzeugs (1) durch die Aufnahmeeinrichtung (2) aufgenommen wird.

15. Fahrzeug nach einem der Ansprüche 12 bis 14, wobei die Anzeigeeinrichtung (4) Teil des Cockpits des Führerstands des Schienenfahrzeugs (1) ist.

16. Fahrzeug nach Anspruch 15 in Kombination mit einer Vorrichtung umfassend die Merkmale des Anspruchs 1, wobei das weitere Anzeigeelement (6) Teil des Cockpits des Führerstands ist und derart in Bezug auf die Anzeigeeinrichtung (4) angeordnet ist, dass die Anzeigeeinrichtung (4) und das Anzeigeelement (6) durch den Führer des Schienenfahrzeugs (1) gleichzeitig wahrgenommen werden können.

17. Verfahren zur Überwachung eines räumlichen Bereichs, insbesondere in der Umgebung oder innerhalb eines Fahrzeugs, vorzugsweise eines Schienenfahrzeugs (1), mit Hilfe einer Vorrichtung nach einem der Ansprüche 1 bis 10, bei dem:
- die Aufnahmeeinrichtung (2) den räumlichen Bereich aufnimmt und einen Bildstrom aus zeitlich aufeinander folgenden Bildern umfassend den räumlichen Bereich erzeugt;
- die mit der Aufnahmeeinrichtung (2) verbundene Anzeigeeinrichtung (4) den erzeugten Bildstrom anzeigt;
- das an den Betrieb der Aufnahmeeinrichtung (2) gekoppelte dynamische Mittel (3) eine optisch wahrnehmbare zeitliche Veränderung bei Betrieb der Aufnahmeeinrichtung (2) erzeugt, wobei das dynamische Mittel (3) eine Mehrzahl von Zuständen annehmen kann und die optisch wahrnehmbare zeitliche Veränderung mit dem dynamischen Mittel (3) durch eine Veränderung der Zustände erzeugt wird;
- das dynamische Mittel (3) zumindest ein dynamisches Element umfasst, welches derart in Bezug auf die Aufnahmeeinrichtung (2) angeordnet ist, dass die Aufnahmeeinrichtung (2) im Betrieb das dynamische Element aufnimmt;
- wobei ein jeweiliges, durch die Aufnahmeeinrichtung (2) erzeugtes Bild den Zustand des dynamischen Mittels (3) zum Zeitpunkt der Erzeugung des jeweiligen Bildes enthält;
**dadurch gekennzeichnet, dass**
- ein in der Anzeigeeinrichtung (4) integriertes oder an der Anzeigeeinrichtung (4) angeordnetes weiteres Anzeigeelement (6) vorgesehen ist, auf dem die gleiche zeitliche Veränderung wie die von dem dynamischen Mittel (3) erzeugte optisch wahrnehmbare zeitliche Veränderung wiedergegeben wird.

## Claims

1. Apparatus for monitoring a spatial region, in particular in the environment of or inside a vehicle, preferably a rail vehicle (1), comprising:
- a recording device (2) for recording the spatial region, wherein during operation the recording device (2) generates an image stream of temporally successive images comprising the spatial region;
- a display device (4), connected to the recording device (2), for displaying the generated image stream;
- a dynamic means (3), coupled to the operation of the recording device (2), for generating an optically perceivable temporal change during the operation of the recording device (2), wherein the dynamic means (3) can assume a plurality of states and the optically perceivable temporal change is able to be generated with the dynamic means (3) by changing the states,
- a dynamic element of the dynamic means (3), which dynamic element is arranged with respect to the recording device (2) such that the recording device (2) records the dynamic element during operation;
- wherein during operation the recording device (2) interacts with the dynamic means (3) such that a respective image that is generated by the recording device (2) contains the state of the dynamic means (3) at the time of the generation of the respective image,
**characterized in that**
a further display element (6) is provided, which is integrated in the display device (4) or arranged on the display device (4) and on which the same temporal change as the optically perceivable temporal change generated by the dynamic means (3) is represented.

2. Apparatus according to Claim 1, wherein the optically perceivable temporal change, which is generated by the dynamic means (3), resolves time intervals of less than five seconds, in particular of one second or less, and/or is continuous.

3. Apparatus according to one of the preceding claims, wherein the at least one dynamic element comprises a time display.

4. Apparatus according to Claim 3, wherein the time display is a digital and/or analogue time display which represents in particular the temporal change at least in seconds or smaller units.

5. Apparatus according to one of the preceding claims, wherein the at least one dynamic element comprises a periodically changing optical element, in particular a flashing optical device.

6. Apparatus according to one of the preceding claims, wherein the dynamic means (3) comprises a timer that is integrated in the recording device (2) and generates a temporally changing display, wherein the state of the display at the time of the generation of the respective image is represented in the respective generated image.

7. Apparatus according to Claim 6, wherein the dynamic means (3) and the further display element (6) use a common timer (5) for generating the same temporal change.

8. Apparatus according to one of the preceding claims, wherein the recording device (2) comprises at least one camera, in particular a digital camera.

9. Apparatus according to one of the preceding claims, further comprising an evaluation unit (7), which during operation analyses the image stream displayed on the display device (4) as to whether the optically perceivable temporal change in the displayed image stream corresponds to the optically perceivable temporal change generated by the dynamic means (3).

10. Apparatus according to Claim 9 in combination with Claim 7, wherein the evaluation unit (7) comprises a recording means for recording the display of the display device (4) and of the further display element (6) and the evaluation unit (7) analyses the recorded displays as to whether the displayed temporal changes on the display unit (4) and the further display element (6) correspond to each other.

11. Vehicle, wherein the vehicle comprises one or more apparatuses according to one of the preceding claims.

12. Vehicle according to Claim 11, wherein the vehicle is a rail vehicle (1), in particular a railcar or a locomotive.

13. Vehicle according to Claim 12, wherein the recording device (2) is arranged on or in the rail vehicle (1) such that a region located rearwards of the cabin of the rail vehicle (1) is recorded by the recording device (2).

14. Vehicle according to Claim 12 or 13, wherein the recording device (2) is arranged on or in the rail vehicle (1) such that at least part of the interior, in particular of a passenger compartment, of the rail vehicle (1) is recorded by the recording device (2).

15. Vehicle according to one of Claims 12 to 14, wherein the display device (4) is part of the cockpit of the cabin of the rail vehicle (1).

16. Vehicle according to Claim 15 in combination with an apparatus comprising the features of Claim 1, wherein the further display element (6) is part of the cockpit of the cabin and is arranged with respect to the display device (4) such that the display device (4) and the display element (6) can be perceived at the same time by the driver of the rail vehicle (1).

17. Method for monitoring a spatial region, in particular in the environment of or within a vehicle, preferably a rail vehicle (1), using an apparatus according to one of Claims 1 to 10, in which:
- the recording device (2) records the spatial region and generates an image stream of temporally successive images comprising the spatial region;
- the display device (4), which is connected to the recording device (2), displays the generated image stream;
- the dynamic means (3), which is coupled to the operation of the recording device (2), generates an optically perceivable temporal change during the operation of the recording device (2), wherein the dynamic means (3) can assume a plurality of states and the optically perceivable temporal change is generated with the dynamic means (3) by way of a change in the states;
- the dynamic means (3) comprises at least one dynamic element which is arranged with respect to the recording device (2) such that the recording device (2) records the dynamic element during operation;
- wherein a respective image generated by the recording device (2) contains the state of the dynamic means (3) at the time of the generation of the respective image;
**characterized in that**
- a further display element (6) is provided, which is integrated in the display device (4) or arranged on the display device (4) and on which the same temporal change as the optically perceivable temporal change generated by the dynamic means (3) is represented.

## Revendications

1. Dispositif destiné à la surveillance d'une zone spatiale, en particulier à proximité ou à l'intérieur d'un véhicule, de préférence d'un véhicule ferroviaire (1), comprenant :
- un système d'enregistrement (2) destiné à l'enregistrement de la zone spatiale, dans lequel le système d'enregistrement (2) génère en fonctionnement un flux d'images à partir d'images se succédant dans le temps et comprenant la zone spatiale ;
- un système d'affichage (4) relié au système d'enregistrement (2) destiné à l'affichage du flux d'images généré ;
- un moyen dynamique (3) couplé au fonctionnement du système d'affichage (2) et destiné à la génération d'une modification temporelle optiquement perceptible lors du fonctionnement du système d'enregistrement (2), dans lequel le moyen dynamique (3) peut adopter une pluralité d'états et la modification temporelle optiquement perceptible peut être générée avec le moyen dynamique (3) par le biais d'une modification des états ;
- un élément dynamique du moyen dynamique (3), lequel est disposé par rapport au système d'enregistrement (2) de telle sorte que le système d'enregistrement (2) enregistre en fonctionnement l'élément dynamique ;
- dans lequel le système d'enregistrement (2) coopère en fonctionnement avec le moyen dynamique (3) de telle sorte qu'une image générée par le biais du système d'enregistrement (2) contient l'état du moyen dynamique (3) au moment de la génération de l'image respective,
**caractérisé en ce que**
un élément d'affichage supplémentaire (6) intégré dans le système d'affichage (4) ou disposé au niveau du système d'affichage (4), élément d'affichage sur lequel est reproduite la même modification temporelle que la modification temporelle optiquement perceptible générée par le moyen dynamique (3).

2. Dispositif selon la revendication 1, dans lequel la modification temporelle optiquement perceptible générée par le biais du moyen dynamique (3) déclenche des intervalles de temps de moins de cinq secondes, en particulier d'une seconde ou moins, et/ou est continue.

3. Dispositif selon l'une des revendications précédentes, dans lequel l'au moins un élément dynamique comprend un affichage de temps.

4. Dispositif selon la revendication 3, dans lequel l'affichage de temps est un affichage de temps numérique et/ou analogique, lequel reproduit en particulier la modification temporelle au moins en secondes ou en unités plus petites.

5. Dispositif selon l'une des revendications précédentes, dans lequel l'au moins un élément dynamique comprend un élément optique se modifiant périodiquement, en particulier un système optique clignotant.

6. Dispositif selon l'une des revendications précédentes, dans lequel le moyen dynamique (3) comprend un compteur de temps intégré dans le système d'enregistrement (2), lequel compteur de temps génère un affichage se modifiant dans le temps, dans lequel l'état de l'affichage est reproduit au moment de la génération de l'image respective dans l'image générée respective.

7. Dispositif selon la revendication 6, dans lequel le moyen dynamique (3) et l'élément d'affichage supplémentaire (6) utilisent un compteur de temps (5) commun pour la génération de la même modification temporelle.

8. Dispositif selon l'une des revendications précédentes, dans lequel le système d'enregistrement (2) comprend au moins une caméra, en particulier une caméra numérique.

9. Dispositif selon l'une des revendications précédentes, comprenant en outre une unité d'analyse (7), laquelle, en fonctionnement, analyse le flux d'images affiché sur le système d'affichage (4) pour déterminer si la modification temporelle optiquement perceptible dans le flux d'images affiché correspond à la modification temporelle optiquement perceptible générée par le biais du moyen dynamique (3).

10. Dispositif selon la revendication 9 en combinaison avec la revendication 7, dans lequel l'unité d'analyse (7) comprend un moyen d'enregistrement destiné à l'enregistrement de l'affichage du système d'affichage (4) et de l'élément d'affichage supplémentaire (6) et l'unité d'analyse (7) analyse les affichages enregistrés pour déterminer si les modifications temporelles affichées sur l'unité d'affichage (4) et l'élément d'affichage supplémentaire (6) correspondent entre eux.

11. Véhicule, dans lequel le véhicule comprend un ou plusieurs dispositifs selon l'une des revendications précédentes.

12. Véhicule selon la revendication 11, dans lequel le véhicule est un véhicule ferroviaire (1), en particulier une automotrice ou une locomotive.

13. Véhicule selon la revendication 12, dans lequel le système d'enregistrement (2) est disposé au niveau du ou dans le véhicule ferroviaire (1) de telle sorte qu'une zone se trouvant à l'arrière de la cabine de conduite du véhicule ferroviaire (1) est enregistrée par le biais du système d'enregistrement (2).

14. Véhicule selon la revendication 12 ou 13, dans lequel le système d'enregistrement (2) est disposé au niveau du ou dans le véhicule ferroviaire (1) de telle sorte qu'au moins une partie de l'espace interne, en particulier d'un espace passagers, du véhicule ferroviaire (1) est enregistrée par le biais du système d'enregistrement (2).

15. Véhicule selon l'une des revendications 12 à 14, dans lequel le système d'affichage (4) fait partie du cockpit de la cabine de conduite du véhicule ferroviaire (1).

16. Véhicule selon la revendication 15 en combinaison avec un dispositif comprenant les caractéristiques de la revendication 1, dans lequel l'élément d'affichage supplémentaire (6) fait partie du cockpit de la cabine de conduite et est disposé par rapport au système d'affichage (4) de telle sorte que le système d'affichage (4) et l'élément d'affichage (6) peuvent être perçus en même temps par le conducteur du véhicule ferroviaire (1).

17. Procédé destiné à la surveillance d'une zone spatiale, en particulier à proximité ou à l'intérieur d'un véhicule, de préférence d'un véhicule ferroviaire (1), à l'aide d'un dispositif selon l'une des revendications 1 à 10, dans lequel :
- le système d'enregistrement (2) enregistre la zone spatiale et génère un flux d'images à partir d'images se succédant dans le temps et comprenant la zone spatiale ;
- le système d'affichage (4) relié au système d'enregistrement (2) affiche le flux d'images généré ;
- le moyen dynamique (3) couplé au fonctionnement du système d'enregistrement (2) génère une modification temporelle optiquement perceptible lors du fonctionnement du système d'enregistrement (2), dans lequel le moyen dynamique (3) peut adopter une pluralité d'états et la modification temporelle optiquement perceptible est générée avec le moyen dynamique (3) par le biais d'une modification des états ;
- le moyen dynamique (3) comprend au moins un élément dynamique, lequel est disposé par rapport au système d'enregistrement (2) de telle sorte que le système d'enregistrement (2) enregistre en fonctionnement l'élément dynamique ;
- dans lequel une image respective générée par le biais du système d'enregistrement (2) contient l'état du moyen dynamique (3) au moment de la génération de l'image respective ;
**caractérisé en ce que**
- un élément d'affichage supplémentaire (6) intégré dans le système d'affichage (4) ou disposé au niveau du système d'affichage (4), élément d'affichage sur lequel est reproduite la même modification temporelle que la modification temporelle optiquement perceptible générée par le moyen dynamique (3).
